Europäisches Patentamt

European Patent Office

Office européen des brevets

(19)

(11) Veröffentlichungsnummer : **0 338 609 B1**

(12) **EUROPÄISCHE PATENTSCHRIFT**

(45) Veröffentlichungstag der Patentschrift :
**13.05.92 Patentblatt 92/20**

(51) Int. Cl.$^5$ : **B60K 15/01, F16L 11/12**

(21) Anmeldenummer : **89200827.7**

(22) Anmeldetag : **31.03.89**

(54) **Kraftstoffrohrleitung mit Leitung zur Schaltung für Kraftfahrzeuge.**

(30) Priorität : **19.04.88 NL 8801004**

(43) Veröffentlichungstag der Anmeldung :
**25.10.89 Patentblatt 89/43**

(45) Bekanntmachung des Hinweises auf die
Patenterteilung :
**13.05.92 Patentblatt 92/20**

(84) Benannte Vertragsstaaten :
**BE DE ES FR IT NL**

(56) Entgegenhaltungen :
**DE-A- 2 841 557
FR-A- 1 494 433
FR-A- 2 220 735
GB-A- 2 066 408
GB-A- 2 161 501
US-A- 1 737 161**

(73) Patentinhaber : **Van Boxel, Rudolphus
Adrianus Jeanne Marie
Minister Aalberselaan 30
NL-5103 BA Dongen (N.B.) (NL)**
Patentinhaber : **Van Boxel-Girelli, Renata
Minister Aalberselaan 30
NL-5103 BA Dongen (N.B.) (NL)**

(72) Erfinder : **Van Boxel, Rudolphus Adrianus
Jeanne Marie
Minister Aalberselaan 30
NL-5103 BA Dongen (N.B.) (NL)**
Erfinder : **Van Boxel-Girelli, Renata
Minister Aalberselaan 30
NL-5103 BA Dongen (N.B.) (NL)**

(74) Vertreter : **Siemens, Andreas Meinhard
Ernest, Dipl.-Ing.
SIEMENS & CIE. Roskam 8
NL-4813 GZ Breda (NL)**

EP 0 338 609 B1

## Beschreibung

Die vorliegende Erfindung bezieht sich auf eine neue Form einer Kraftstoffleitung und einer Schaltleitung für Kraftfahrzeuge welche mit gasförmigem Kraftstoff wie Autogas angetriben werden.

Sie bezieht sich auch auf die Herstellung und den Einbau solcher Leitungen in das Fahrzeug.

Der Kraftstoff wird in einem Kraftstoffbehälter welcher für einen Druck von zumindest 25 bar geeignet ist mitgeführt.

Der Kraftstoff ist darin flüssig und wird durch eine Leitung zum Verdampfer und Druckregler nach den Vergaser geführt.

Durch einen Umschalter kann entweder mit Otto-Kraftstoff oder mit Autogas gefahren werden.

Für eine Flüssiggasvorrichtung in Kraftfahrzeugen sind von den nationalen Behörden Prüfungsvorschriften erlassen worden(z.B. Niederländische LPG-Prüfungsvorschrift vom 1.Oktober 1978), in welchen die Anforderungen, denen der Kraftstoffbehälter, die Füllungs und Anzapfanschlüsse, die automatische Absperrung, der Druckregler und die Vorrichtung zur Begrenzung des Füllungsverhältnisses genügen müssen, festgelegt sind, damit die Sicherheit der Vorrichtung unter allen Umständen gewährleistet ist.

Bezüglich der Ueberdruckleitung im Kraftfahrzeug ist dazu festgelegt, dass die Leitung und die Fassungen vom Kraftstoffbehälter zum Druckregler aus nahtlosem Stahl, Messing oder Kupfer bestehen müssen.

Der Aussendruckmesser dieser Leitungen darf höchstens 12 mm betragen. Stahlleitungen müssen eine Wandstärke von zumindest 1.25 mm besitzen und müssen zweckmässig gegen äussere Korrosion geschützt sein. Kupfer- und Messingleitungen müssen eine Wandstärke von zumindest 0.8 mm besitzen. Die Leitungen müssen in genügendem Masze schwingungsfrei befestigt und unterstützt sein.

Die Leitungen dürfen nicht mittels Schweissung oder Verlötung befestigt sein.

Verwendung einer Ueberdruckleitung die aus mehr als einem Teil besteht darf nur dort stattfinden, wo Montage einer Leitung aus einem Stück unmöglich ist.

Der Anschluss am Rohrende wird so ausgeführt, dass das hornförmig erweiterte Rohrende mittels einem Wirtel oder mit Schnittringen verbunden wird.

Die Ueberdruckleitung soll immer höher liegen als ein im Abstand von höchstens 15 cm befindlicher tragender Teil des Fahrzeuges.

Wenn die Ueberdruckleitung weniger als 10 cm von der Auspuffleitung entfernt ist, muss zwischen beiden Teilen eine Anschirmplatte aus Metall angebracht werden.

Um die Ueberdruckleitung gegen aufschnellende Steine und dergleichen zu schützen, muss diese in einer Umhüllung aus Gummi oder aus einem geeigneten Kunststoff gefasst sein.

Wo die Abschnitte dieser Umhüllung im Motorraum sowie im Raum, in welchem sich der Kraftstoffbehälter befindet, enden, muss die Umhüllung an einigen Stellen unterbrochen sein.

Der Steuerungsstrom für die Betätigung des Absperrventils und für die Niveau-Anzeige muss sorgfältig von der Leitung die vom Behälter zum Motor führt, isoliert sein.

In GB-A-2066408 ist eine Saugleitung für einen Staubsauger beschrieben, welche abgeflacht oder mit einer Rille über die gesamte Länge versehen ist, worin sich ein spiralenförmiges Metallkabel mit Isolierung in einer Hülle befindet, sodass das Ansaugen und die elektrische Betätigung im selben Schlauch untergebracht sind. Die elektrische Leitung kann hin und her schieben in der Hülle. Für ein Fahrzeug und Kraftstoff ist dies nicht geeignet.

Die Aufgabe der vorhandenen Erfindung liegt darin, eine Kraftstoffleitung und ein elektrischer Leiter für Absperrbedienung und Bedienungsrelais für das Umschalten von Benzin auf Gas zu entwickeln, welche jede einzeln hochwertig isoliert in eine schützende Umhüllung aus Kunststoff unter dem Fahrgestell des Fahrzeugs untergebracht und befestigt werden kann. Die Aufgabe wird durch die Merkmale des Kennzeichens des Anspruches 1 gelöst.

Die Armaturen, welche vor der vorderen Achse und hinter der rückseitigen Achse des Fahrzeugs angebracht sind, dürfen nicht unterhalb der Fläche liegen, die durch die gedachte Berührungslinie des linken und des rechten Reifens der vorderen beziehungsweise der rückseitigen Achse mit der Wegdecke und der Unterseite der Vorder- beziehungsweise Rückseite der Karrosserie gebildet wird.

Die elektrische Leitung für die Schaltung kann einpolig oder mehrpolig sein.

Der negative Pol des Akkumulators wird mit dem Fahrgestell verbunden und der Positive Pol wird mit der Leitung verbunden, die naturgemäss sorgfältig isoliert sein muss.

Die elektrische Leitung, die zwischen dem Absperrventil des Kraftstoffbehälters und dem Motor verläuft, ist mit einem Schalter für das Umschalten von Benzin auf Gas versehen, und sie dient auch für ein Relais zur Anzeige.

Die vorliegende Erfindung die allen Sicherheitsvorschriften genügt, besteht aus einer Verbindung zwischen Kraftstoffbehälter und Verdampfer-Druckregler, welche Verbindung an der Unterseite des Fahrgestells des Fahrzeugs angebracht ist, und die gekennzeichnet ist, durch eine nahtlos extrudierte Ummantelung, in welcher sich das Metallrohr für die Kraftstoffförderung und eine oder mehrere gesondert isolierte elektrische Leiter für die Bedienung, Schaltung und Anzeigefunktionen neben einander jedoch völlig von einander getrennt befinden, welche Ummantelung an der Unterseite des Fahrgestells in der Mitte oder an einer der Seitenkanten in Abständen von etwa 50 cm mit Hilfe von Bügeln oder Satteln am Fahrgestell oder an der selbsttragenden Karrosserie befestigt ist, wobei diese Befestigungen nicht am tiefsten Punkt und nicht bei den Angriffsstellen für den Wagenheber angebracht werden.

Mittels dieser Konstruktion wird erzielt, dass man gleichzeitig die Kraftstoffförderleitung und die elektrische Leitung oder die Leitungen am Fahrzeug montieren kann, und dass keine einzelnen elektrischen Leitungen an anderen Stellen mit Durchdringungen in und am Fahrgestell beziehungsweise der Karrosserie erforderlich sind, wodurch die Montage, Wartung und Prüfung vereinfacht werden und die Sicherheit der Gesamtanlage erhöht wird.

Die Ummantelung des Kraftstoffförderungsrohrs und des einen oder mehrerer isolierter Leitungsdrähte werden durch Schneckenpresse in Handelslängen von etwa 6 m erstellt.

Das Verfahren zur Herstellung der Vorrichtung ist dadurch gekennzeichnet, dass man eine schlauchförmigen nahtlose Hülle als Kunststoff oder aus synthetischem Kautschuk mit dauerhafter Flexibilität und Stossfestigkeit, welche durch Schneckenpressen erzeugt wurde, von eine Haspel abwickelt und auf einen Streckrahmen streckt, worauf man darin das Metallrohr in der erforderlichen Länge einsteckt und daneben innerhalb derselben Hülle den oder die einzeln isolierten elektrischen Leiter gleichzeitig einführt.

Das ganze wird in Handelslängen Montagefertig mit Bügeln, und/oder Satteln und Wirbelflanschen geliefert.

Die Montage ist dann einfach, weil keinerlei andere spezielle Bearbeitungen an Fahrgestell oder Karrosserie ausgeführt werden müssen. Gemäss einer alternativen Herstellungsmethode kann das Metallrohr auch bereits in der Schneckenpressenphase der ummantelungshülle mit dem Hüllenmaterial versehen werden, wobei das Metallrohr und die Adern der elektrischen Leitung im Radialabstand zu einander nach der Extrusion in die Hülle eingeführt werden.

Eine dritte alternative Methode zum Anbringen der Umhüllung und des isolierten elektrischen Drahtes oder der Drähte an die Kraftstoffleitung ist das Einführen in Schrumpfschlauch, wonach man durch leichtes Erwärmen den Kunststoff des Schrumpfschlauches (vorgedehntes Polyvinylchlorid) um das Rohr und den Draht oder die Drähte schrumpfen lässt.

Die vorliegende Erfindung bezieht sich auf die Fertigung, Montage und Anwendung der beschriebenen Ausrüstung, welche aus Kraftstoffleitung, elektrische Leiter und schützende und isolierende Hülle besteht. Die Ausführung und die Art der Montage werden an Hand der beigefügten Zeichnungen weiter erläutert.

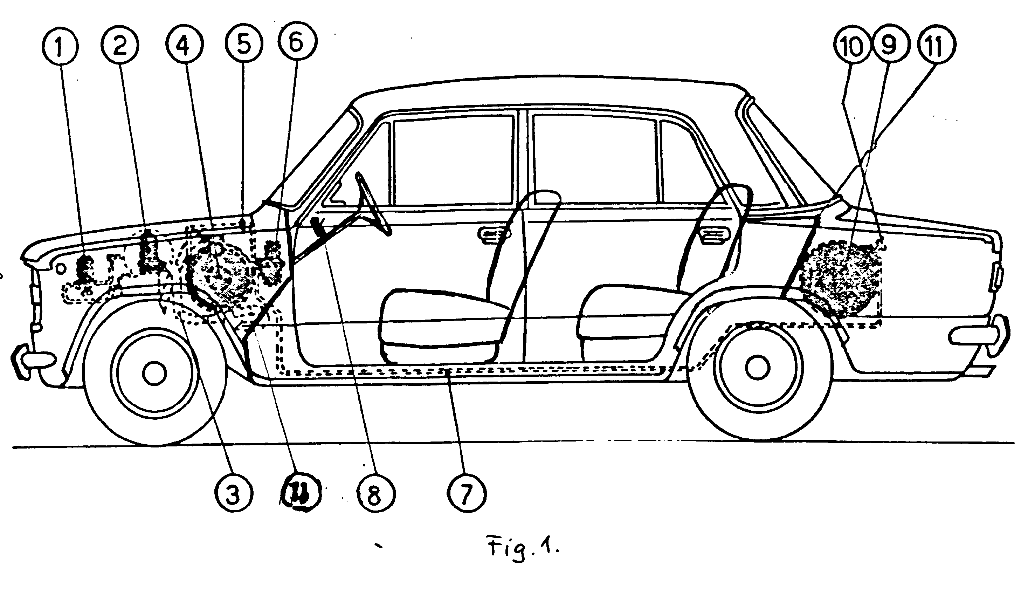

Figur 1 zeigt schematisch die erfindungsgemäss vorgesehene Montage der Ausrüstung.

In dieser Figur ist (1) das Absperrventil für Benzin, (2) das Vergasergemischteil, (3) das Gaszufuhrteil, (4) der Verdampfer-Druckregler, (5) das Filter, (6) das Absperrventil für Gas, (7) die erfindungsgemässe Leitung, welche die Kraftstoffleitung und die isolierte elektrische Leitung in einem Mantel enthält, welche mit Bügeln befestigt ist und wovon die Kraftstoffleitung mit Wirteln mit dem Behälter (9) und dem Verdampfer (4) verbunden ist, (8) ist der Schalter für das Umschalten von Benzin auf Gas, (9) ist der Kraftstoffbehälter, (10) ist das elektrisch betätigte Absperrventil für die Gasabnahme, und (11) sind Schutzschilde an Vor- und Rückseite der Kabine des Fahrzeugs.

Figur 2 zeigt einen Querschnitt durch die Ummantelungshülle mit dem Rohr und dem elektrischen Leiter.

Figur 3 zeigt eine alternative Verkörperung, in welcher mehr als ein elektrischer Leiter aufgenommen ist.

Figuren 4 und 5 zeigen profilierte Formen der Ummantelung.

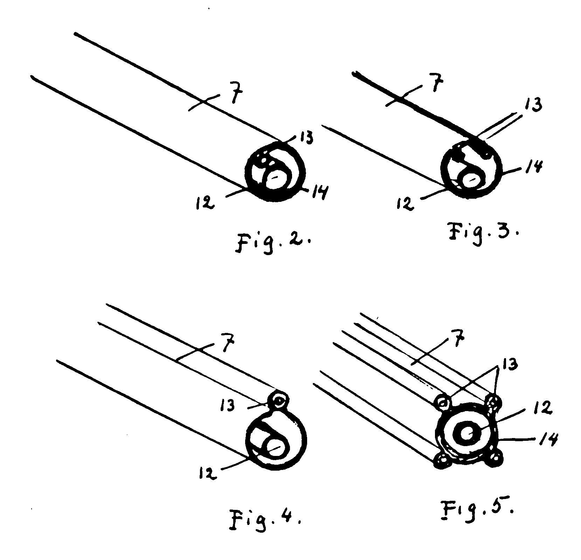

In diesen Figuren 2 bis 5 ist (12) das Metallrohr für das heranbringen des Kraftstoffes, (13) sind die elektrischen Drähte für Bedienung, Relais und Anzeige, und (14) ist die Ummantelung (die schützende Hülle), welche aus einem nahtlosen Mantel besteht.

Das Material des Mantels ist ein fester schlag beständiger und einigermassen flexibler thermoplastischer Kunststoff, wie weichgemachtes Polyvinylchlorid, Polyäthylen, oder ein synthetischer Kautschuk, wie "Hypalon" oder "Neoprene", eventuell mit Glas- oder Fasergewebe verstärkt.

Das Material des Rohres ist Stahl, Messing oder Kupfer, für einen Ueberdruck wie angegeben geeignet.

Mit der erfindungsgemässen Montage können Auto's auf einfache und zweckmässige Art ausgerüstet werden mit Kraftstoffleitungen und Elektrizitätsleitungen welche erforderlich sind für Verbrennungsmotoren die geeignet sind für Flüssiggas und für ähnliche unter Druck flüssig gelagerte Gase, wobei die Sicherheit in hohem Masze gewährleistet ist. Als Beispiel für die Fertigung sei angegeben, dass eine Kupferleitung von etwa 15 m Länge und 11 mm ⌀ von einer Haspel abgerollt wird, während auch der schützende Mantel und der isolierte Kupferleitungsdraht von Haspeln abgerollt werden, worauf die Kupferleitung in den linearen Mantel aus Polyvinylchlorid geschoben wird und gleichzeitig der isolierte Leiter in den Mantel gelegt wird.

Für die Anwendung ist der Arbeitsdruck 10 Atü, während die Ventile auf 25 bar und der Behälter auf 100 bar geprüft sind. Es ist empfehlenswert Gas mit einem Geruchzusatz (Odorant) zu verwenden. Gute Belüftung ist gewährleistet, da die Leitung unter der Karrosserie und mit Bügeln befestigt verläuft.

Die Vorrichtung ist auch für Motorboote sehr geeignet.

## Patentansprüche

1. Kraftstoffleitung für Motorfahrzeuge, deren Motor durch einen unter Druck flüssigen Kraftstoff getrieben wird, welcher mit Luft gemischt nach Verdampfung in die Verbrennungskammer geleitet wird, dadurch gekennzeichnet, dass die Verbindung (7) zwischen Kraftstoffbehälter (9) und Verdampfer-Druckregler (4) aus einer nahtlosen Ummantelung (14) besteht, in welcher sich das mettalische Rohr (12) der Kraftstoffleitung und ein oder mehrere getrennt isolierte Elektrizitätsleiter (13) zur Bedienung, Schaltung und Anzeigenfunktion neben einander, doch gänzlich von einander getrennt, befinden, welche Ummantelung (14) an der Unterseite des Fahrgestells in der Mitte oder an einer der Seitenkanten in Abständen von etwa 50 cm mittels Bügeln und/oder Satteln am Fahrgestell oder an der selbsttragenden Karrosserie befestigt ist, wobei diese Befestigungen nicht an der untersten Stelle und nicht an den Stellen für den Angriff des Wagenhebers angebracht werden.

2. Kraftstoffleitung nach Anspruch 1, dadurch gekennzeichnet, dass die Ummantelung (14) der Verbindung (7) aus einem flexiblen und schlagfesten Kunststoff oder synthetischem Kautschuk besteht, welche Ummantelung durch Schneckenpressen gefertigt ist und worin das Metallrohr (12) und der oder die Elektrizitätsleiter (13) eingeführt werden.

3. Kraftstoffleiter nach Anspruch 1, dadurch gekennzeichnet, dass die Ummantelung (14) aus Schrumpfschlauch von Polyvinylchlorid besteht.

4. Verfahren zur Herstellung der Kraftstoffleitung nach Anspruch 1, dadurch gekennzeichnet, dass man eine schlauchförmige nahtlose Hülle (14) aus Kunststoff oder aus synthetischem Kautschuk mit dauerhalfter Flexibilität und Stossfestigkeit streckt, worauf man darin das Metallrohr (12) in der erforderlichen Länge einsteckt und daneben innerhalb dieselben Hülle den oder die einzeln isolierten elektrischen Leiter (13) gleichzeitig einführt.

5. Verfahren zum Einbau der Kraftstoffleitung nach Anspruch 1, dadurch gekennzeichnet, dass man die Verbindung (7) an der Unterseite des Fahrgestells oder des Karrosserie mit Hilfe von Bügeln oder Satteln befestigt und die Enden mit Rohrwirteln an den Kraftstoffbehälter (9) und an den Verdampfer (4) anschliesst.

## Claims

1. A fuel line for motor cars, the motor of which being driven by a fuel which is liquid under pressure, said fuel being mixed with air after evaporation and conducted into the combustion chamber, characterized in that the connecting means (7) between the fuel container (9) and the evaporation-pressure-control (4) consists of a seamless jacket lining (14), which comprises the metallic pipe (12) of the fuel line and one or several separately insulated electrical conductors (13) for the control, switching and indicational function,next to each other but separated entirely, said jacket lining (14) being affixed at the underside of the chassis in the middle or at one of the sides in distances of about 50 cm by means of clamps and/or saddles at the chassis or at the self-sustaining car-body, provided that said fixations are not made at the lowest point and not at the spot for positioning of the car lifting jack.

2. A fuel line according to claim 1, characterized in that the jacket lining (14) of the connecting means (7) consists of a flexible and impact-resistant plastic or of a synthetic rubber, said jacket lining being made by extrusion,and into which the metallic pipe (12) and the electrical conductors (13) have been introduced.

3. A fuel line according to claim 1, characterized in that the jacket lining consists of heat-shrinking hose of polyvinyl chloride.

4. A method of manufacturing a fuel line according to claim 1, characterized in that a seamless jacket hose (14) of plastic or of synthetic rubber having durable flexibility and impact resistance is stretched, that then the metallic pipe (12) is inserted by the length as required, and that parallel to same into the same jacket the separately insulated electrical conductors (13) are inserted at the same time.

5. A method for the mounting of the fuel line according to claim 1, characterized in that the connecting means (7) are affixed at the underside of the chassis or at the car-body by means of clamps or saddles,and that the ends are connected by means of coupling nuts at the fuel container (9) and at the evaporator (4).

## Revendications

1. Une conduite à comburant pour voitures dont le moteur est entrainé par un combustible fluide sous pression, qui est mélangé de l'air après l'évaporation et puis entre dans la chambre à combustion, caractérisée en ce que la ligne de raccordement (7) du réservoir (9) du comburant et vers le régulateur (4) de la pression de l'évaporateur consiste d'un enrobage (14) sans sutures, dans lequel se trouvent le tube métallique (12) et l'une ou plusieurs lignes électriques (13) isolées séparément côte à côte pour le réglage, l'accélération et l'indication, séparées l'une à l'autre, et que ledit enrobage (14) est attaché au dessous du chassis, au centre ou à l'une des côtés aux distances de 50 cm environs, au moyen de colliers de fixation ou de gâches au chassis ou au train de la carrosserie, dont lesdites fixations ne sont pas à la partie inférieure ou à l'endroit du placement du cric d'enlèvement.

2. Une conduite à comburant selon la revendication 1, caractérisée en ce que l'enrobage (14) du raccordement (7) consiste d'une matière plastique ou d'un caoutchouc synthétique flexible et résistant aux chocs, dont ledit enrobage est produit par extrusion et dans lequel le tube métallique (12) et l'une ou plussieurs de lignes électriques (13) sont introduites.

3. Une conduite à comburant selon la revendication 1, caractérisée en ce que l'enrobage consiste d'un tuyau de chlorure de polyvinyle se contractant à la chaleur.

4. Une méthode de fabrication de conduites à comburant selon la revendication 1, caractérisée en ce que l'on étire l'enrobage (14) en forme d'un tuyau sans sutures qui consiste d'une matière plastique ou d'un caoutchouc synthétique ayant une flexibilité et résistance aux chocs, puis le tube métallique (12) de longueur nécessaire est inséré et en même temps auprès de cela dans le même enrobage les lignes électriques (13) isolées séparément sont introduites.

5. Une méthode d'incorporation de la conduite à comburant selon la revendication 1, caractérisée en ce que la ligne de raccordement (7) est attachée au dessous du chassis ou de la carrosserie au moyen de colliers de fixation ou de gâches et que les bouts sont branchés au réservoir (9) et à l'évaporateur (4) au moyen d'écrous de serrage.

Fig. 1.

Fig. 2.

Fig. 3.

Fig. 4.

Fig. 5.